# EUROPÄISCHE PATENTANMELDUNG

(11) **EP 1 059 457 A2**
(43) Veröffentlichungstag der Anmeldung: **13.12.2000**
(21) Anmeldenummer: 00890186.0
(22) Anmeldetag: 06.06.2000
(51) Int. Cl.: F04D 29/62, F04D 29/04, F01P 5/10

(54) **Kreiselpumpe**

(30) Priorität: 10.06.1999 AT 103299
(71) Anmelder: TCG UNITECH Aktiengesellschaft, 4560 Kirchdorf/Krems (AT)
(72) Erfinder: Schober, Martin, 4591 Molln (AT)
(74) Vertreter: Babeluk, Michael, Dipl.-Ing. Mag.

(57) **Zusammenfassung**

Die Erfindung betrifft eine Kreiselpumpe (1) mit einem in einem Pumpengehäuse (2) angeordneten Pumpenlaufrad (4), welches über eine Weile (3) antreibbar ist, wobei die Welle (3) über zumindest ein Lager (5) drehbar im Pumpengehäuse (2) gelagert ist, wobei das vorzugsweise als Wälzlager ausgebildete Lager (5) in einem Lagerhalter (6) angeordnet ist, wobei der Lagerhalter (6) lösbar mit dem Pumpengehäuse (2) verbunden ist. Um die Herstellung der Wasserpumpc (1) zu vereinfachen und die Wartung zu erleichtern, ist vorgesehen, dass der Lagerhalter (6) am dem Pumpenlaufrad (4) zugewandten Ende einen vorzugsweise mit dem Rohrteil (8) einstückig ausgeführten Montageteil (14) aufweist.

## Beschreibung

Die Erfindung betrifft eine Kreiselpumpe mit einem in einem Pumpengehäuse angeordneten Pumpenlaufrad, welches über eine Welle antreibbar ist, wobei die Welle über zumindest ein Lager drehbar im Pumpengehäuse gelagert ist, wobei das vorzugsweise als Wälzlager ausgebildete Lager in einem Lagerhalter angeordnet ist, wobei der Lagerhalter lösbar mit dem Pumpengehäuse verbunden ist.

Bei bekannten Kreiselpumpen werden Lager und Gleitringdichtungen bei der Fertigung direkt in das Pumpengehäuse eingepresst. Pumpengehäuse samt Laufrad werden als vorgefertigte Einheit dem jeweiligen Anwendungszweck zugeführt. Im Falle eines Lagerschadens muss die gesamte Pumpe samt Spiralgehäuse ausgetauscht werden. Da das Pumpengehäuse den Lagerträger bildet, muss dieses zur Wärmeableitung metallisch ausgebildet sein, was sich nachteilig auf den Herstellungsaufwand und das Gewicht der Anordnung auswirkt.

Kreiselpumpen der genannten Art sind durch die US 5,409,350 A, die FR 2 353 771 A1 und die US 2,203,525 A geoffenbart. Bei den beiden ersten genannten Druckschriften ist der Lagerhalter durch eigene Schrauben mit dem Pumpengehäuse verbunden. Der Lagerhalter ist dabei von der Laufradseite in das Pumpengehäuse eingesetzt. Da die Befestigungsschrauben des Lagerhalters vom Laufrad verdeckt sind, muss zur Demontage und Montage des Lagerhalters das Laufrad von der Welle entfernt werden.

Bei der US 2,203,525 A ist der Lagerhalter von der Seite des Laufrades in das Pumpengehäuse eingesetzt und an der dem Laufrad abgewandten Seite durch eine Überwurfmutter am Pumpengehäuse befestigt. Diese Konstruktion würde an sich erlauben, den Lagerhalter samt Laufrad aus dem Pumpengehäuse auszubauen. Um die Überwurfmutter zu lösen, ist es allerdings erforderlich, die Aggregatteile an der dem Laufrad abgewandten Seite, wie Antriebsscheibe, Antriebsmotor, oder dergleichen vorher abzumontieren. Auch die FR 937 265 A zeigt eine ähnliche Konstruktion.

Aufgabe der Erfindung ist es, diese Nachteile zu vermeiden und eine Kreiselpumpe vorzuschlagen, welche einfach herzustellen und zu warten ist.

Erfindungsgemäß erfolgt dies dadurch, dass der Lagerhalter am dem Pumpenlaufrad zugewandten Ende einen vorzugsweise mit dem Rohrteil einstückig ausgeführten Montageteil aufweist. Durch den Montageteil wird eine sehr einfache Demontage des von der Seite des Laufrades in das Pumpengehäuse eingesetzten Lagerhalters ermöglicht. Die Betätigung des Montageteiles ist besonders vorteilhaft auch bei aufgesetztem Laufrad möglich.

Der Lagerhalter dient zur Aufnahme des Lagers und zur Ableitung der Lagerwärme. Das Pumpengehäuse selbst kann dabei aus jedem beliebigen Material, beispielsweise Aluminium, Magnesium oder aber auch aus Kunststoff ausgebildet sein. Vorzugsweise ist vorgesehen, dass der Lagerhalter einen im wesentlichen zylindrischen Rohrteil zur Aufnahme des Lagers aufweist. Der Innenmantel des Rohrteiles ist dabei mit Press- oder Spielpassung ausgeführt und dient zur Aufnahme des Lagers. Der Rohrteil hat darüber hinaus auch die Aufgabe, Leckagen abzuführen. Dazu ist vorgesehen, dass der Innenmantel des Rohrteiles zumindest einen als axiale Nut ausgeführten Leckagekanal aufweist. Um die Abführung der Leckagen unabhängig von der Einbauposition des Rohrteiles zu ermöglichen, ist es besonders günstig, wenn der Innenmantel des Rohrteiles mehrere gleichmäßig über den Umfang verteilte, als axiale Nuten ausgebildete Leckagekanäle aufweist.

Weiters kann vorgesehen sein, dass in dem Lagerhalter ein Dichtungselement, vorzugsweise eine Gleitringdichtung, im Bereich des laufradseitigen Endes des Lagerhalters eingepresst ist, wobei vorzugsweise vorgesehen ist, dass der Lagerhalter im Übergangsbereich zwischen Rohrteil und Montageteil einen Bund aufweist, auf welchem das Dichtungselement aufgepresst ist.

Am laufradseitigen Ende ist der Lagerhalter über ein Dichtmittel gegenüber dem Aufnahmebereich des Pumpengehäuses abgedichtet. Der Lagerhalter weist darüber hinaus einen Auflagebund im Bereich des laufradseitigen Endes auf, bis zu welchem der Lagerhalter auf das Pumpengehäuse aufgeschoben wird. Das Dichtmittel, beispielsweise eine O-Ring-Dichtung, ein Dichtlack oder eine Mikroverkapselung des Schraubengewindes, kann dabei auch die Verdrehsicherung übernehmen. Als Verdrehsicherung kann auch eine Oberflächenrändelung der Stirnfläche des Auflagebundes des Lagerhalters gegenüber dem Aufnahmebereich des Pumpengehäuses vorgesehen sein.

In einer besonders bevorzugten Ausführungsvariante der Erfindung ist vorgesehen, dass der Rohrteil an seinem Außenmantel ein Gewinde aufweist. Über das Gewinde wird der Lagerhalter in den Aufnahmebereich des Pumpengehäuses eingeschraubt, wodurch eine sichere, aber dennoch lösbare Verbindung zwischen Lagerhalter und Pumpengehäuse entsteht.

Um eine besonders einfache Montage und Demontage zu ermöglichen, ist vorgesehen, dass der Montageteil einen vorzugsweise durch einen Sechskant gebildeten Formschlussbereich als Angriffsfläche für ein Werkzeug aufweist, wobei der kleinste Abstand des Formschlussbereiches von der Wellenachse größer ist als der größte Radius des Laufrades. Das Profil des Montageteiles ist dabei weitgehend dem Profil des Laufrades angepasst, um Toträume auf ein Mindestmaß zu reduzieren. Bei einem Laufrad mit bezüglich einer Normalebene auf die Drehachse geneigten Strömungskanälen kann beispielsweise vorgesehen sein, dass der Montageteil eine gegenüber einer Normalebene auf die Wellenachse zum Rohrteil hin geneigte Stirnfläche aufweist.

In einer weiteren, äußerst vorteilhaften Ausführungsvariante ist vorgesehen, dass der Außenmantel des Rohrteiles eine Presspassung aufweist und der Lagerhalter in den zylindrischen Aufnahmebereich des Pumpengehäuses eingepresst ist. Der Lagerhalter wird dabei in den zylindrischen Aufnahmebereich des Pumpengehäuses bis zum durch den Auflagebund gebildeten Anschlag eingepresst. Statt einer Presspassung kann der Außenmantel des Rohrteiles aber auch eine Spielpassung aufweisen und über eine Sicherungsschraube gegenüber dem Pumpengehäuse verdrehgesichert sein. Um das Angreifen von Press- oder Schiebewerkzeugen am Lagerhalter zu ermöglichen, ist vorgesehen, dass zur Montage des Lagerhalters in das Laufrad mehrere axiale Montageöffnungen, vorzugsweise im Bereich des Auflagebundes, eingeformt sind und die Montageöffnungen durch Dichtmittel abgedichtet sind. Als Dichtmittel für die Montageöffnungen kann beispielsweise ein Dichtlack verwendet werden. Eine eventuell spätere Demontage des Lagerhalters kann über geeignete Abziehwerkzeuge erfolgen.

Besonders günstig ist es, wenn das den Lagerhalter aufnehmende Pumpengehäuse durch das Spiralgehäuse der Kreiselpumpe gebildet ist.

Sehr vorteilhaft kann die Erfindung bei einer als Kühlmittelpumpe ausgebildeten Kreiselpumpe für eine Brennkraftmaschine angewendet werden, bei der das Spiralgehäuse einstückig mit der Ölwanne ausgeführt ist. Die Ölwanne samt Spiralgehäuse kann dabei unabhängig von den restlichen Elementen der Kreiselpumpe gefertigt werden. Die Welle, das Lager und das Laufrad sowie der Lagerhalter werden vorgefertigt und zusammengebaut und als Einheit in das Spiralgehäuse der Ölwanne eingeschraubt oder eingepresst. Bei einem eventuellen Schaden am Lager oder am Laufrad im Laufe der Betriebsdauer braucht nur die aus Lagerhalter Lager, Welle und Laufrad bestehende Pumpeneinheit, aber nicht das durch die Ölwanne gebildete Spiralgehäuse, gewechselt werden.

Durch den Lagerhalter ergibt sich der Vorteil, dass für die Fertigung und die Materialauswahl des Spiralgehäuses große Freiheiten zur Verfügung stehen, so dass das Spiralgehäuse einstückig mit anderen Maschinenteilen aus beliebigen Materialien ausgeführt werden kann.

Die Erfindung wird im folgenden anhand der Figuren näher erläutert. Es zeigen
- Fig. 1 und 2: Schrägansichten der erfindungsgemäßen Wasserpumpe,
- Fig. 3 und 4: Schrägansichten des Lagerhalters der erfindungsgemäßen Wasserpumpe,
- Fig. 5: eine Stirnansicht der erfindungsgemäßen Wasserpumpe bei abgenommenen Gehäusedeckel,
- Fig. 6: die Wasserpumpe in einem Schnitt gemäß der Linie VI-VI in Fig. 5, und
- Fig. 7: die erfindungsgemäße Wasserpumpe in einer Ausführungsvariante in einem Schnitt analog zu Fig. 6.

Die Kreiselpumpe 1 weist ein Pumpengehäuse 2 auf, in welchem ein auf einer Welle angeordnetes Pumpenlaufrad 4 drehbar gelagert ist. Der Druckstutzen ist mit 2a bezeichnet. Das als Wälzlager ausgeführte Lager 5 ist dabei in einem Lagerhalter 6 eingesetzt, welcher an einen zylindrischen Aufnahmebereich 7 des Pumpengehäuses 2 lösbar befestigt ist. Der Lagerhalter 6 weist einen im wesentlichen zylindrischen Rohrteil 8 mit einem zylindrischen Innenmantel 9 auf, in welchem der Außenring 10 des Lagers 5 eingepresst ist. An der dem Pumpenlaufrad 4 zugewandten Seite weist der Lagerhalter 6 einen Auflagebund 11 auf, dessen Stirnfläche 11a am Aufnahmebereich 7 aufliegt.

Auf der dem Pumpenlaufrad 4 zugewandten Seite ist in den Lagerhalter 6 weiters eine Gleitringdichtung 16 eingepresst, über welche das Lager 5 gegenüber dem Pumpenlaufrad 4 abgedichtet ist.

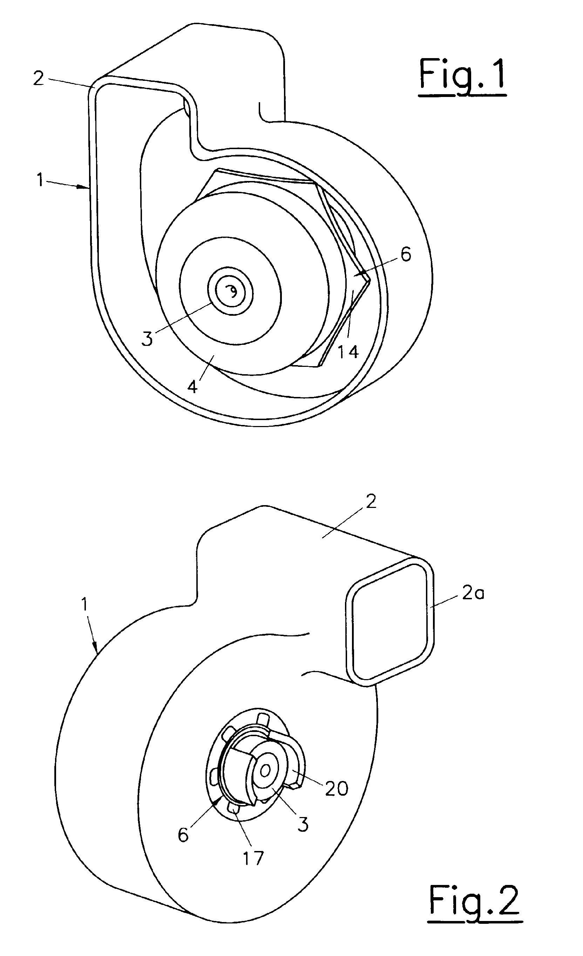

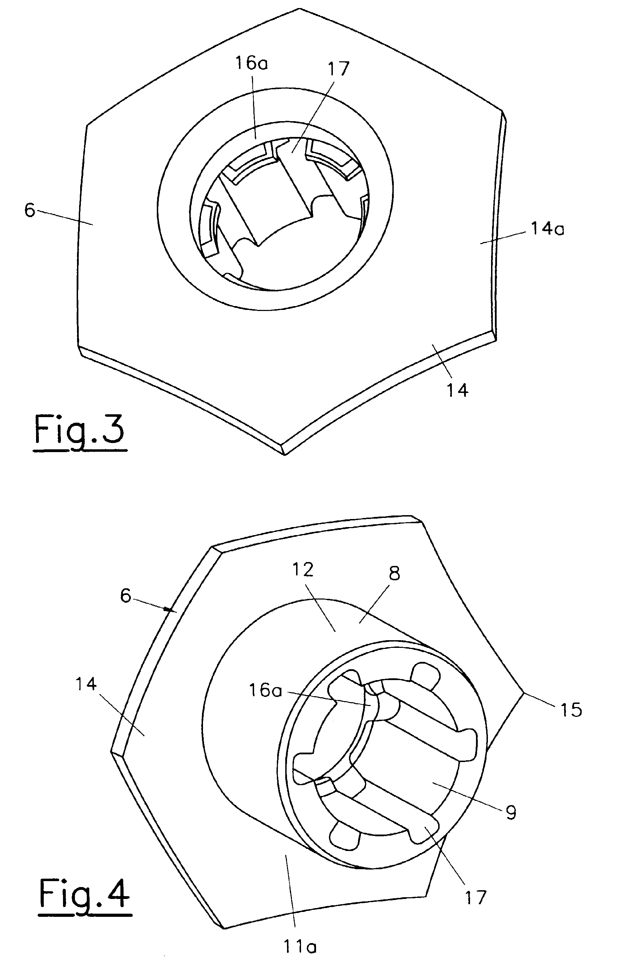

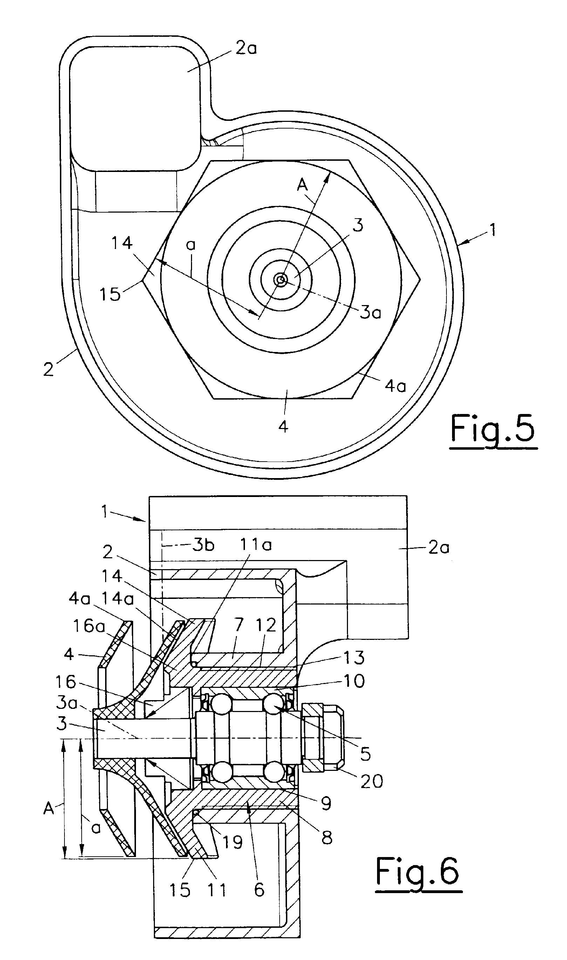

Der Lagerhalter 6 ist in der in den Figuren 1 bis 6 dargestellten Ausführungsvarianten in den Aufnahmebereich 7 des Pumpengehäuses 2 eingeschraubt. Der Außenmantel 12 des Rohrteiles 8 weist zu diesem Zweck ein Außengewinde 13 auf. Um eine schnelle Montage bzw. Demontage des Lagerhalters 6 am Pumpengehäuse 2 zu ermöglichen, ist der Lagerhalter 6 an der dem Pumpenlaufrad 4 zugewandten Seite mit einem schirmartigen Montageteil 14 versehen, welcher einen im Ausführungsbeispiel als Sechskant ausgeführten Formschlussbereich 15 aufweist. Der Formschlussbereich 15 ist dabei so ausgeführt, dass ein Werkzeug, beispielsweise ein Steckschlüssel, über das Laufrad 4 auf den Montageteil 14 aufgesetzt werden kann. Der Formschlussbereich 15 muss dabei mindestens so weit von der Drehachse 3a der Welle 3 beabstandet sein, wie der größte Radius A des Laufradkranzes 4a des Pumpenlaufrades 4. Der Montageteil 14 weist eine gegenüber der Normalebene 3b auf die Wellenachse 3a geneigte Stirnfläche 14a auf.

Abgesehen von der Aufgabe der Aufnahme des Lagers 5 und der Gleitringdichtung 16, hat der Lagerhalter 6 noch die Aufgabe, Leckageströme der Gleitringdichtung 16 außerhalb des Pumpengehäuses 2 abzuführen. Dazu weist der Innenmantel 9 des Rohrteiles 8 des Lagerhalters 6 mehrere gleichmäßig um den Umfang verteilte, als axiale Nuten ausgeführte Leckagekanäle 17 auf, wie aus den Figuren 2 bis 4 ersichtlich ist. Durch die Vielzahl von Leckagekanälen 17 ist gewährleistet, dass Leckagen zuverlässig abgeführt werden können, auch wenn beim Einschrauben des Lagerhalters 6 die Endposition der Leckagekanäle 17 nicht eindeutig vorbestimmt ist.

Anstatt über ein Außengewinde 13 kann der Lagerhalter 6 auch über eine Schnellkupplung in das Pumpengehäuse 2 eingesetzt sein.

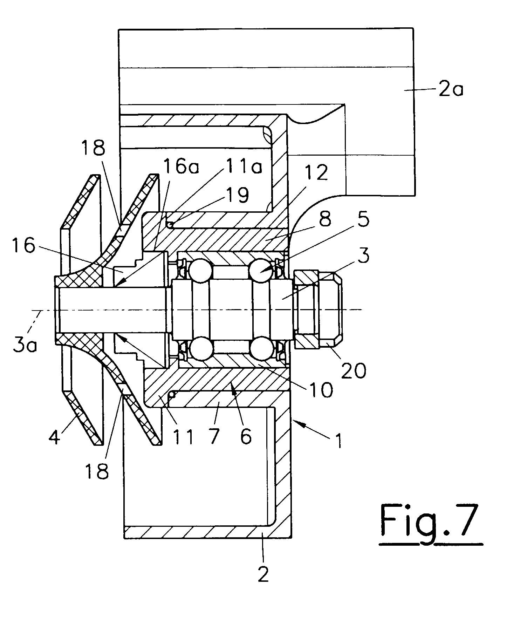

Alternativ zu einer formschlüssigen Verbindung zwischen dem Lagerhalter 6 und dem Pumpengehäuse 2 kann der Lagerhalter 6 auch in den Aufnahmebereich 7 des Pumpengehäuses 2 eingepresst werden, wie in der in Fig. 7 dargestellten Ausführung angedeutet ist. Zum Ansetzen eines Presswerkzeuges am Aufnahmebund 11 des Lagerhalters 6 weist das Pumpenlaufrad 4 mehrere Montageöffnungen 18 auf, welche nach durchgeführter Montage über ein nicht weiter dargestelltes Dichtmittel, beispielsweise einen O-Ring oder einen Dichtlack, abgedichtet werden. Statt einer Presspassung zwischen dem Lagerhalter 6 und dem Aufnahmebereich 7 kann der Außenmantel 12 des Rohrteiles 8 auch mit einer Spielpassung ausgeführt sein, wobei die Sicherung gegen Verdrehen durch zusätzliche Sicherungsschrauben erfolgt.

Zur Abdichtung des Lagerhalters 6 gegenüber dem Pumpengehäuse 2 ist im Bereich des Aufnahmebundes 11 eine beispielsweise als O-Ring 19 ausgeführte Dichtmittel vorgesehen. Als Dichtmittel kann auch ein Dichtlack oder eine Mikroverkapselung des Schraubengewindes eingesetzt werden.

Mit Bezugszeichen 20 ist eine Kupplung zum Anschluss einer Antriebseinrichtung für die Welle 3 bezeichnet.

Im Ausführungsbeispiel wird das Pumpengehäuse 2 durch den Spiralgehäuseteil der Kreiselpumpe 1 gebildet.

Die erläuterte Ausführung hat den Vorteil, dass die aus Pumpenlaufrad 4, Welle 3, Lager 5 und Lagerhalter 6 bestehende Einheit unabhängig vom Pumpengehäuse 2 gefertigt und zusammengestellt werden kann und als Ganzes lösbar mit dem Pumpengehäuse 2 verbunden wird. Dadurch ist es möglich, die Einheit im Bedarfsfall auszutauschen, ohne dass das gesamte Pumpengehäuse mit gewechselt werden muss. Das Pumpengehäuse 2 kann somit einstückig mit einem größeren Maschinenteil, beispielsweise einstückig mit der Ölwanne einer Brennkraftmaschine, ausgeführt werden. Der vorzugsweise aus Metall bestehende Lagerhalter 6 gewährleistet, dass die Lagerwärme schnell und unabhängig vom Material des umgebenden Spiralgehäuses 2 abgeführt werden kann. Dies ermöglicht eine hohe Flexibilität in der Materialwahl des Pumpengehäuses 2, so dass auch für dieses neben verschiedenen Leichtmetallen, wie Aluminium, Magnesium oder dgl., auch Kunststoff verwendet werden kann.

## Patentansprüche

1. Kreiselpumpe (1) mit einem in einem Pumpengehäuse (2) angeordneten Pumpenlaufrad (4), welches über eine Welle (3) antreibbar ist, wobei die Welle (3) über zumindest ein Lager (5) drehbar im Pumpengehäuse (2) gelagert ist, wobei das vorzugsweise als Wälzlager ausgebildete Lager (5) in einem Lagerhalter (6) angeordnet ist, wobei der Lagerhalter (6) lösbar mit dem Pumpengehäuse (2) verbunden ist, **dadurch gekennzeichnet,** dass der Lagerhalter (6) am dem Pumpenlaufrad (4) zugewandten Ende einen vorzugsweise mit dem Rohrteil (8) einstückig ausgeführten Montageteil (14) aufweist.

2. Kreiselpumpe (1) nach Anspruch 1, **dadurch gekennzeichnet,** dass der Lagerhalter (6) einen im wesentlichen zylindrischen Rohrteil (8) zur Aufnahme des Lagers (5) aufweist.

3. Kreiselpumpe (1) nach Anspruch 2, **dadurch gekennzeichnet,** dass der Rohrteil (8) an seinem Außenmantel (12) ein Gewinde (13) aufweist.

4. Kreiselpumpe (1) nach einem der Ansprüche 1 bis 3, **dadurch gekennzeichnet,** dass der Montageteil (14) einen vorzugsweise durch einen Sechskant gebildeten Formschlussbereich (15) als Angriffsfläche für ein Werkzeug aufweist, wobei der kleinste Abstand (A) des Formschlussbereiches (15) von der Wellenachse (3a) größer ist als der größte Radius (a) des Laufrades (3).

5. Kreiselpumpe (1) nach Anspruch 4, **dadurch gekennzeichnet,** dass der Montageteil (14) eine gegenüber einer Normalebene (3b) auf die Wellenachse (3a) zum Rohrteil (8) hin geneigte Stirnfläche (14a) aufweist.

6. Kreiselpumpe (1) nach einem der Ansprüche 2 bis 5, **dadurch gekennzeichnet,** dass zur Aufnahme des Lagers (5) der Innenmantel (9) des Rohrteiles (8) als Presspassung ausgeführt ist und das Lager (5) in den Rohrteil (8) eingepresst ist.

7. Kreiselpumpe (1) nach einem der Ansprüche 1 bis 6, **dadurch gekennzeichnet,** dass der Innenmantel (9) des Rohrteiles (8) zumindest einen als axiale Nut ausgeführten Leckagekanal (17) aufweist.

8. Kreiselpumpe (1) nach Anspruch 6, **dadurch gekennzeichnet,** dass der Innenmantel (9) des Rohrteiles (8) mehrere gleichmäßig über den Umfang verteilte, als axiale Nuten ausgebildete Leckagekanäle (17) aufweist.

9. Kreiselpumpe (1) nach einem der Ansprüche 1 bis 7, **dadurch gekennzeichnet,** dass in dem Lagerhalter (6) ein Dichtungselement, vorzugsweise eine Gleitringdichtung (16), im Bereich des laufradseitigen Endes des Lagerhalters (6) eingepresst ist.

10. Kreiselpumpe (1) nach Anspruch 9, **dadurch gekennzeichnet,** dass der Lagerhalter (6) im Übergangsbereich zwischen Rohrteil (8) und Montageteil (14) einen Bund (16a) aufweist, auf welchem das Dichtungselement aufgepresst ist.

11. Kreiselpumpe (1) nach einem der Ansprüche 1 bis 10, **dadurch gekennzeichnet,** dass der Lagerhalter (6) im Bereich des laufradseitigen Endes einen Auflagebund (11) aufweist.

12. Kreiselpumpe (1) nach einem der Ansprüche 1 bis 11, **dadurch gekennzeichnet,** dass der Lagerhalter (6) vorzugsweise im Bereich des laufradseitigen Endes über ein Dichtmittel, gegenüber dem Aufnahmebereich (7) des Pumpengehäuses (2) abgedichtet und vorzugsweise durch das Dichtmittel verdrehgesichert ist.

13. Kreiselpumpe (1) nach einem der Ansprüche 2 bis 12, **dadurch gekennzeichnet,** dass der Außenmantel (12) des Rohrteiles (8) eine Presspassung aufweist und der Lagerhalter (6) in den zylindrischen Aufnahmebereich (7) des Pumpengehäuses (2) eingepresst ist.

14. Kreiselpumpe (1) nach einem der Ansprüche 2 bis 12, **dadurch gekennzeichnet,** dass der Außenmantel (12) des Rohrteiles (8) eine Spielpassung aufweist und der Lagerhalter (6) in den zylindrischen Aufnahmebereich (7) des Pumpengehäuses (2) eingeschoben und vorzugsweise über zumindest eine Sicherungsschraube verdrehgesichert ist.

15. Kreiselpumpe (1) nach Anspruch 13 oder 14, **dadurch gekennzeichnet,** dass zur Montage des Lagerhalters (6) in das Laufrad (4) mehrere axiale Montageöffnungen (18), vorzugsweise im Bereich des Auflagebundes (11), eingeformt sind und vorzugsweise die Montageöffnungen (18) durch die Dichtmittel abgedichtet sind.

16. Kreiselpumpe (1) nach Anspruch 12 oder 15, **dadurch gekennzeichnet,** dass das Dichtmittel durch einen Dichtlack gebildet ist.

17. Kreiselpumpe (1) nach Anspruch 12, **dadurch gekennzeichnet,** dass das Dichtmittel durch eine Mikroverkapselung oder eine O-Ring-Dichtung (19) gebildet ist.

18. Kreiselpumpe (1) nach einem der Ansprüche 1 bis 17, **dadurch gekennzeichnet,** dass der Lagerhalter (6) im Spiralgehäuse des Pumpengehäuses (2) angeordnet ist.

19. Kreiselpumpe (1) nach Anspruch 18, wobei die Kreiselpumpe (1) als Kühlmittelpumpe einer Brennkraftmaschine ausgebildet ist, **dadurch gekennzeichnet,** dass das Spiralgehäuse einstückig mit einer Ölwanne der Brennkraftmaschine ausgeführt ist.
